# EUROPEAN PATENT APPLICATION

(11) **EP 3 777 985 A1**
(43) Date of publication of application: **17.02.2021**
(21) Application number: 19382714.4
(22) Date of filing: 14.08.2019
(51) Int. Cl.: A63F 13/98, A63F 13/803

(54) **BASE PLATFORM FOR VIRTUAL SIMULATION STEERING WHEELS**

(71) Applicant: IOVALUE TECH S.L., 28029 Madrid (ES)
(72) Inventor: Perán Pérez, Gonzalo, 28029 MADRID (ES)
(74) Representative: Díaz de Bustamante y Terminel, Isidro

(57) **Abstract**

BASE PLATFORM FOR VIRTUAL SIMULATION STEERING WHEELS, comprised of a compact structure comprising a lower horizontal frame (2), foldable by sliding guide profiles (3) that make it up, between an extended position of use and a folded position of non-use of shorter length (I), including at least one pedal support (4) and an area for seat support (5); and a vertical frame (6) which, in turn made up by many other guide profiles (3), arranged as a bridge over the lower horizontal frame (2), comprises, at least, a steering wheel support (7), being equally foldable by sliding to reduce its height (a).

## Description

### OBJECT OF THE INVENTION

The invention, as exposed on the wording of the present specification, relates to a base platform for virtual simulation steering wheels which imparts to the function it is intended to, advantages and characteristics, which will be described in detail below and which mean a remarkable novelty.

More specifically, the object of the invention is focused on a structure whose purpose is to provide a platform serving as support base for virtual simulation components of games and video games, especially mid and high-end steering wheels, which, in addition to being able to withstand the high forces generated by gaming systems, it has the advantage of being foldable and compact as well as offering the possibility of modular configuration to incorporate different supports to accommodate different elements of a system, such as seat, screen, computer/console and additional accessories, allowing its adaptation to the different needs of each user occupying a minimum space,

### APPLICATION FIELD OF THE INVENTION

The field of application of the present invention is framed within the industry sector dedicated to the manufacture of accessories for computer games and video games, focusing particularly in the field of support structures for virtual simulation components, and more specifically for steering wheels.

### BACKGROUND OF THE INVENTION

Due to the high demand for simulation components, mainly of mid and high-end steering wheels, it is necessary to have bases for its installation with the capacity to withstand the high forces generated by gaming systems. These forces can reach load pressures of 130 kg of pressure on the simulation pedals and 25 Nm of torque on the steering wheels.

Simulation chassis with the ability to withstand these forces require a high rigidity aluminium structure. This, together with the need for the installation of screens, computer/console and additional accessories, means that the dimensions of these structures are bulky, which requires a large amount of available space to install them.

Thus, existing products currently consist of simulation chassis grouped into the following types:
- Rigid aluminium chassis, consisting of high-strength and high-end professional platforms, which take up a lot of space and have a very high price.
- Supports for steering wheels and pedals, consisting of basic supports for fastening the steering wheels and pedals to a foot or table using a desk chair or sofa to play, so they do not offer the necessary resistance for use in simulations of mid and high-end
- Game seats, consisting of platforms that connect a seat and a fastening foot for steering wheel and pedals. These platforms are mainly made of steel, are not compact, take up a lot of space and are expensive.

The objective of the present invention is therefore to provide the market with a product with similar capacities in terms of rigidity, but in 50% less space through a folding system so that it can be installed in smaller locations or shared spaces.

On the other hand, and as a reference to the current state of the art, it should be noted that, at least on the part of the applicant, it is unknown the existence of any other base platform for virtual simulation steering wheels presenting technical, structural and constitutive characteristics equal to or similar to those presented in the one that is herein claimed.

### EXPLANATION OF THE INVENTION

The base platform for virtual simulation steering wheels that the invention proposes allows to satisfactorily achieve the aforementioned objectives, being the characterizing details making it possible and distinguishing it conveniently set forth in the final claims that accompany the present description.

More specifically, this platform, as noted above, is a structure that aims to serve as a support base for virtual simulation steering wheels, especially mid and high-end ones, by being able to withstand the high forces generated by the gaming systems, which, in addition to having an optionally modular configuration, to incorporate or not different support elements to attach different components of a system according to the needs of each user, such as seat, screen, computer/console and additional accessories, presents the advantage of being a foldable and compact structure, so it takes up a minimum space, both in folded and use position.

To this end, and more specifically, the platform of the invention is essentially configured from a compact structure that basically comprises a lower horizontal frame, suitable for incorporating a seat support and a pedal, and which is foldable by sliding the guide profiles that make it up to reduce its length, and a vertical frame which, in turn made up by guide profiles arranged as a bridge over the horizontal frame, comprises, at least, a support for incorporating a steering wheel, being equally foldable by sliding to reduce its height.

Preferably, the lower horizontal frame for the seat and pedal support is adaptable to the user's height by adjusting it to the vertical frame.

Preferably, the pedal support can also be adjusted in inclination with four positions.

Preferably, the support for the steering wheel is a universal support, suitable for the main manufacturers of simulation steering wheels on the market, also comprising a screen support up to 32".

Preferably, the platform of the invention also includes a support for the computer/console (CPU or game console), which is incorporated on the side of one of the guide profiles of the vertical frame, being adjustable by means of fastening straps.

In addition, preferably, the platform is a modular product in which the different supports that the structure thereof can include in the profiles of both frames are sold separately, so that the user can acquire them gradually according to their needs.

Preferably, said supports are:
- The steering wheel support; so that the base structure can be used as a support for a simulation steering wheel without a seat, for use with a chair or sofa.
- The seat support, forming an expansion to incorporate a foldable seat in the platform.
- The screen support, consisting of a support for a monitor up to 32' adaptable to third-party products.
- And the computer/console support, consisting of a support to install a PC or game console on the platform.

Therefore, the base platform of the invention has the following advantages over current market products:
- High Rigidity: the structure has high levels of rigidity, comparable to the solutions of the main manufacturers, supporting the installation of professional steering wheels with torque forces above 17 Nm and braking pressures of 70 Kg.
- Compact Solution: The folding system by sliding of the profiles that make up the horizontal frame for the seat support, allows to reduce the size of the platform up to 80 cm, so that it can be located in rooms with other uses and little space available
- Modular Product: The platform allows to expand the incorporation of elements, starting from a structure with a pedal support and with a steering wheel support for use with a sofa or office chair, to which you can add the different accessory supports that make up the complete product, such as the seat support, screen support, computer/video game console support as well as others that could be developed in the future. This modularity of the product guarantees the user's investment and allows starting with a base solution that adapts to the user's needs over time.
- Ease of shipping and transport: The platform is distributed in a folded position packaging, which allows its transport easily in utility vehicles or its storage.
- Easy assembly: The product is sold pre-assembled to reduce complexity and assembly time by the user.

### DESCRIPTION OF THE DRAWINGS

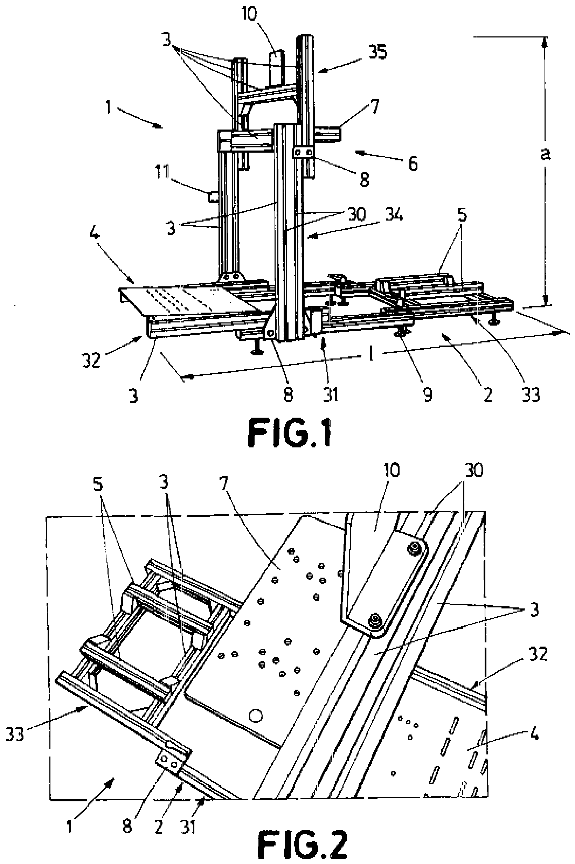

In order to complete the description being made and to ease a better understanding of the characteristics of the invention, we attach to the present specification, making part of the same, a set of layouts where, with an illustrative non limitative character, the following has been represented:
Figure number 1.- Shows a side perspective view of an embodiment of the base platform for virtual simulation steering wheels object of the invention, represented in an unfolded position, showing the parts and elements it comprises and their arrangement.
Figure number 2.- shows a top perspective view of a portion of the base platform for virtual simulation steering wheels, according to the invention, shown in Figure 1, showing in greater detail the configuration of the supports that it has for incorporating the steering wheel and seat.
Figure number 3.- Shows a side perspective view of the example of the platform of the invention shown in the preceding figures, in this case represented in a folded position, showing the reduction of the space it takes up.

And figure number 4.- Shows a top perspective view of the platform in the folded position, showing in greater detail the arrangement of the profiles forming the lower horizontal chassis where the seat and pedal support is included in its folded position.

### PREFERENTIAL EMBODIMENT OF THE INVENTION

In light of the mentioned figures, and according to the numbering taken on them, can be seen in them an example of non-limiting realization of the base platform for virtual simulation steering wheels of the invention, which comprises the parts and elements indicated and described in detail below.

Thus, as can be seen in said figures, the platform (1) in question is configured essentially from a compact structure that basically comprises:
- a lower horizontal frame (2), which is foldable by sliding a set of guide profiles (3) that make it up, so that it has an extended position of use (figures 1 and 2) where it has a determined length (I) and a folded non-use position (figures 3 and 4) where it has a considerably shorter length (I), approximately one third in length, and which includes at least one pedal support (4) at one end of the lower horizontal frame (2) and an area suitable for the inclusion of a seat support (5) at the opposite end, whose mutual separation can be regulated through the sliding of the guide profiles (3);
- and a vertical frame (6) which, in turn made up by many other guide profiles (3), in this case arranged as a bridge over the lower horizontal frame (2), comprises, at least, a steering wheel support (7), being equally foldable by sliding to reduce its height (a) from an extended position of use (figure 1) to a folded position of non-use (figure 2).

Preferably, the guide profiles (3) that make up the lower horizontal frame (2) and the vertical frame (6) are rectangular section profiles provided with one or two longitudinal guides (30) running each of their faces and in which anchors (8) are inserted to ensure the coupling between them and/or the different supports as a possibility of sliding to regulate their position.

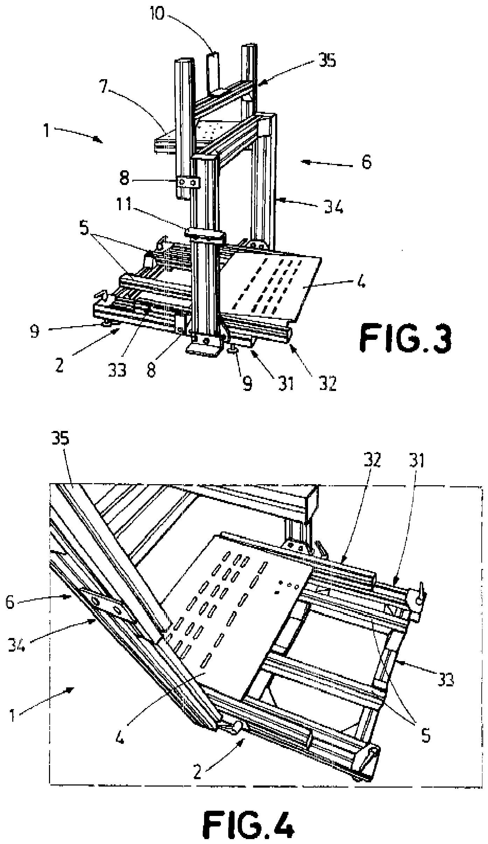

Preferably, the guide profiles (3) of the lower horizontal frame (2) comprise a fixed central section (31) formed by two parallel side profiles (3), and two sliding end sections, one front (32) and one rear (33), which are coupled to the fixed central section (31) respectively on the profiles thereof the front section (32) and between them the rear section (33), so that when sliding for folding they do not interfere with each other, as shown in figure 3.

Preferably, the front sliding end section (32), which is also formed by two parallel lateral guide profiles (3), is the one that incorporates the pedal support (4), which is formed by a flat plate provided with orifices for the anchoring of a pedal.

Preferably, this pedal support (4) is anchored to the profiles of the front sliding end section (32) with anchors (not noticeable in the figures) of adjustable inclination in up to four positions.

Preferably, the rear sliding end section (33) is formed by two parallel lateral guide profiles (3) and two crossbars suitable for incorporating the seat support (5), which, in turn, is formed by two smaller guide profiles, allowing to regulate their position for adaptation to different seat models.

Preferably, each of the sections, fixed central (31) and front (32) and rear (33) sliding ends that form the lower horizontal frame (2) of the platform (1) incorporate height adjustable support legs (9).

Preferably, the vertical frame (6) is made up by two vertical side profiles (3) and a cross-sectional profile (3) defining a lower adjustable bridge (34) where the steering wheel support (7) is incorporated, consisting of a platform with orifices, and by an upper adjustable bridge (35) formed by two other side profiles (3) and another cross-section profile which, in turn, is capable of incorporating a screen support (10), being all profiles (3) that form both bridges (34, 35) coupled in the longitudinal guides (30) thereof so that their relative position is adjustable to adapt it as appropriate and for its folding reducing its height.

Preferably, the platform (1) further comprises a computer/console support (11), which, in the preferred embodiment, is incorporated into the side of one of the guide profiles (3) of the vertical frame (6), which It is made up from a plate that is fixed by means of anchors (8) inserted in the longitudinal guides (30) of the external face of one of the profiles of the lower adjustable bridge (34).

Having sufficiently described the nature of the present invention, as well as a way of putting it into practice, it is not considered necessary to make a more extensive explanation in order that any expert in this area will understand its scope and the advantages that can be derived from it, making known that, within reason it could be put into practice in other embodiments differing in detail from that indicated by way of example, and which will obtain the same degree of protection, provided that they do not alter, change, or modify its fundamental principle.

## Claims

1. BASE PLATFORM FOR VIRTUAL SIMULATION STEERING WHEELS, **characterized by** being configured from a compact structure comprising:
- a lower horizontal frame (2), which is foldable by sliding a set of guide profiles (3) that make it up, presenting an extended position of use where it has a determined length (I) and a folded position of non-use where it has a shorter length (I), and which includes at least one pedal support (4) at one end of the lower horizontal frame (2) and an area suitable for the inclusion of a seat support (5) at the opposite end, whose mutual separation can be regulated through the sliding of the guide profiles (3);
- and a vertical frame (6) which, in turn made up by many other guide profiles (3), in this case arranged as a bridge over the lower horizontal frame (2), comprises, at least, a steering wheel support (7), being equally foldable by sliding to reduce its height (a) from an extended position of use to a folded position of non-use.

2. BASE PLATFORM FOR VIRTUAL SIMULATION STEERING WHEELS, according to claim 1, **characterized in that,** in the folded position, the lower horizontal frame (2) has a length (1) which is one third of that in the extended position.

3. BASE PLATFORM FOR VIRTUAL SIMULATION STEERING WHEELS, according to claim 1 or 2, **characterized in that** the guide profiles (3) that make up the lower horizontal frame (2) and the vertical frame (6) are rectangular section profiles provided with one or two longitudinal guides (30) that run through each of their faces and in which anchors (8) are inserted to ensure the coupling between them and/or the different supports as a possibility of sliding to regulate their position.

4. BASE PLATFORM FOR VIRTUAL SIMULATION STEERING WHEELS, according to claim 3, **characterized iin that** the guide profiles (3) of the lower horizontal frame (2) comprise a fixed central section (31) formed by two parallel lateral profiles (3), and two sliding end sections, one front (32) and one rear (33), which are coupled to the fixed central section (31) respectively on the profiles thereof the front section (32) and between them the rear section (33), so that when sliding for folding they do not interfere with each other.

5. BASE PLATFORM FOR VIRTUAL SIMULATION STEERING WHEELS, according to claim 4, **characterized in that** the front sliding end section (32), which is also formed by two parallel lateral guide profiles (3), incorporates the pedal support (4).

6. BASE PLATFORM FOR VIRTUAL SIMULATION STEERING WHEELS, according to claim 5, **characterized in that** the pedal support (4) is anchored to the profiles of the front sliding end section (32) with anchors of adjustable inclination in up to four positions.

7. BASE PLATFORM FOR VIRTUAL SIMULATION STEERING WHEELS, according to any of claims 4 to 6, **characterized in that** the rear sliding end section (33) is formed by two parallel lateral guide profiles (3) and two crossbars suitable for incorporating the seat support (5), which, in turn, is formed by two individual guide profiles of smaller dimensions, allowing to regulate their position for adaptation to different seat models.

8. BASE PLATFORM FOR VIRTUAL SIMULATION STEERING WHEELS, according to any of claims 4 to 7, **characterized in that** each of the sections, fixed central (31) and front (32) and rear (33) sliding ends that form the lower horizontal frame (2) incorporate height adjustable support legs (9).

9. BASE PLATFORM FOR VIRTUAL SIMULATION STEERING WHEELS, according to any of claims 3 to 8, **characterized in that** the vertical frame (6) is made up by two vertical side profiles (3) and a cross-sectional profile (3) defining a lower adjustable bridge (34) where the steering wheel support (7) is incorporated, and by an upper adjustable bridge (35) formed by two other lateral profiles (3) and another cross-sectional profile which, in turn, being all the profiles (3) which form both bridges (34, 35) coupled in the longitudinal guides (30) thereof so that their relative position is adjustable to adapt it as appropriate.

10. BASE PLATFORM FOR VIRTUAL SIMULATION STEERING WHEELS, according to claim 9, **characterized in that** the vertical frame (6) is capable of incorporating a screen support (10).

11. BASE PLATFORM FOR VIRTUAL SIMULATION STEERING WHEELS, according to any of claims 1 to 10, **characterized in that** it further comprises a computer/console support (11).

12. BASE PLATFORM FOR VIRTUAL SIMULATION STEERING WHEELS, according to claims 1 to 11, **characterized in that** the computer/console support (11) is incorporated into the side of one of the guide profiles (3) of the vertical frame (6).
